Europäisches Patentamt

European Patent Office

Office européen des brevets

(11) Publication number: **0 636 954 A1**

## (12) EUROPEAN PATENT APPLICATION

(21) Application number: **94201399.6**

(22) Date of filing: **18.05.94**

(51) Int. Cl.⁶: **G05B 19/042**

(30) Priority: **28.07.93 IT MI931686**

(43) Date of publication of application:
**01.02.95 Bulletin 95/05**

(84) Designated Contracting States:
**DE FR GB**

(71) Applicant: **SIT LA PRECISA S.r.l.**
**Via dell'Industria, 31/33**
**I-35129 Padova (IT)**

(72) Inventor: **Turrin, Gian Piero**
**Via Beato Pellegrino, 152**
**I-35137 Padova (IT)**
Inventor: **Fandella, Stefano**
**Via Liette, 2/3**
**I-31010 Ormelle,**
**Treviso (IT)**
Inventor: **Antonello, Walter**
**Via Delle Prese Perse, 81**
**I-35015 Galliera Veneta,**
**Padova (IT)**

(74) Representative: **Falcetti, Carlo et al**
**c/o JACOBACCI & PERANI S.p.A.**
**Via Visconti di Modrone, 7**
**I-20122 Milano (IT)**

(54) An electronic control board for boilers.

㊼ An electronic control board for boilers,
comprising a control microprocessor (5), means
(7,11,12,13,14,16,18,19,20) for inputting signals to
said microprocessor which represent variable set
points to be regulated and protective actions, control
means (26,27,35,37) connected to outputs of said
microprocessor to act on said variables to be regu-
lated in response to signals from said microproces-
sor, and further comprising:
    a communication connector (48) connected to
said microprocessor for connecting said microprocessor to microprocessor interrogation and control
devices external of the board, and
    a non-volatile read/write memory (56) for storing
variable boiler control parameters, anomalous boiler
events, and timing indications related to said events.

EP 0 636 954 A1

Rank Xerox (UK) Business Services
(3.10/3.09/3.3.4)

FIG.1

The present invention relates to an electronic control board for boilers of the so-called combined type and intended for home space heating and heating household water (commonly referred to as sanitary water) for example.

Currently available from the market are compact high-performance boilers for home use which are controlled through electronic circuits formed on a small number (usually two) of printed circuit boards and cooperating to provide essentially the following basic control functions:

flame ignition and monitoring, and

flame modulation (regulation).

A flame ignition and monitoring board is directed to ignite the boiler burner by actuating a spark generator, and to monitor the presence of the flame, shutting off the fuel (usually, but not limited to, gas) delivery system in the event of the flame going off (safety function).

A flame modulation board is expected to handle the whole boiler functionalities, and constitutes the intelligent core of the apparatus.

Its function is not limited to modulating the fuel flow rate according to demand, and includes checking that the power output exceeds neither a first predetermined value in the starting condition nor a second value after starting; that the temperatures of the sanitary water, when accessed, and the primary circuit heating water have preset values by the user; that the ambient temperature is kept within a predetermined range conforming with a heating program set by a programming clock; and that the heating system is turned off on the occurrence of abnormal events, such as temperature safeguarding actions (on either the primary circuit or the flue gas), absence of water in the primary circuit, or such malfunctions as breaks or shorts in the circuits of thermometer probes.

Thus. the modulation board, which has evolved over time from regulating and monitoring systems of the analog type to digital systems with microprocessors and A/D conversion interfaces, is to perform multiple functions many of which can be tailored to the individual user and to match the specific characteristics of the various boiler types with which the board is to be associated for operation.

Therefore, it is to meet plural requirements, including:

ready adaptability to filling different demands, and easily tested board and system; and

ease of system maintenance, fault-finding and repair.

The control boards currently available from the market fail to meet these requirements.

Adaptability to different demands cannot be provided because most of the control functions are performed on the basis of programs which are stored in a fixed read-only memory of the microprocessor and depend on intervention by the component manufacturer for any alterations.

The board testability involves the availability of test beds to simulate operating conditions, or involves the installation in heating systems and lengthy and complex testing procedures, because the interaction with the control system can only take place through input and signal terminals of the board and through the control signal output terminals.

The detection of electric signals at intermediate test points of the board is difficult to obtain and requires expensive testing equipment.

The board service and maintenance procedures after installation require that the system be test run and the various symptoms which keep appearing examined.

Thus, they are lengthy procedures whigh yield unreliable results when the symptoms detected are insufficient for the purpose of troubleshooting.

These drawbacks are obviated by the control board of the present invention comprising, according to a first aspect of the present invention, a communication port which enables the board microprocessor to be connected to such external devices as a PC or a tester capable of exchanging messages with the microprocessor, discontinuing and checking its operation at the software stage, and through the microprocessor, monitoring the operation of the whole board over time to measure, for example,

selected temperatures,

temperatures (real or dummy) detected by probes,

settings,

states of the inputs and the outputs, and

any failure or malfunction.

According to a further aspect of the present invention, the board includes a read/write non-volatile memory, preferably of the EEPROM type, into which such data can be logged as hours of operation, temperatures and operating conditions during the latest hours of boiler operation, failure types and the operation time when they occurred, with the boiler in use, in short the modulation board history.

This information is held in the non-erasable memory even in the event of a power outage or when the system is turned off, and may be extracted through the communication port, thereby simplifying the maintenance operations, and any fault-finding and repair work.

The non-erasable memory may also be written other information fron outside, such as:

Serial and Model numbers,

manufacturing date,

installation and inspection date, and

dates of any maintenance and repair work carried out.

According to a further aspect of the present invention, the non-erasable read/write memory, also referred to as non-volatile memory, is used for storing a number of operation parameters for use by the control programs of the microprocessor, thereby to provide a very high degree of programming flexibility and adaptability to the user's own requirements without involving adjustment of the microprocessor at the production stage.

In this way, using a special programming SW, the operation parameters can be set each time, thereby diversifying the functionalities of a single product into a plurality of special batches directed to fill specific user's demands.

Likewise, certain operation parameters, presently involving the use and calibration of potentiometers by specialized personnel, may be stored into the non-erasable memory and be read out by the microprocessor whenever necessary during operation, for component savings which would comfortably compensate for the added costs which accompany the non-erasable memory and the communication gate.

The invention features and advantages will become apparent from the following description of a preferred embodiment and the accompanying drawings, in which:

Figure 1 shows an electric circuit diagram of a preferred embodiment of a boiler control board according to the present invention;

Figure 2 is a timing diagram of the main regulation functions served by the board shown in Figure 1; and

Figure 3 is a graph of power vs. temperature representing the regulation characteristic of the board shown in Figure 1.

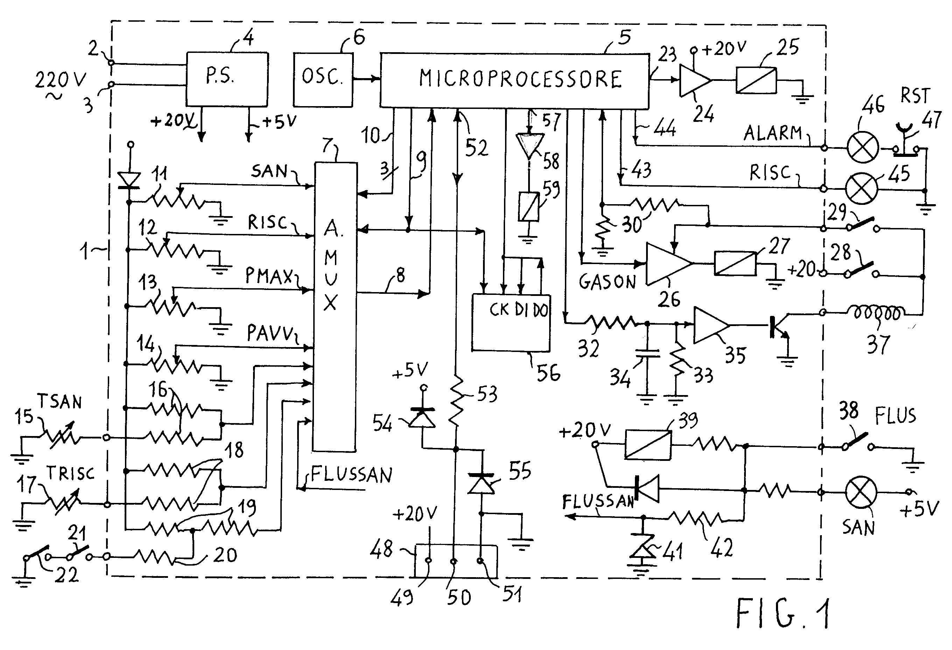

With reference to Figure 1, the control board of the invention comprises a printed circuit support 1 on which a number of components are secured and interconnected as appropriate.

The board is supplied mains voltage (e.g., 220 VAC) through two terminals 2, 3 connected to a group of components forming a power supply or PS 4 of a known type.

The power supply supplies the electronic circuits with a first DC supply voltage +5 V and a second DC supply voltage +20 V for power components (e.g., electromagnetic devices).

Although not illustrated, the board is provided with output terminals for transferring the mains voltage and the power supply voltage to successive boards, e.g. a flame ignition and monitoring board.

The core of the board is a microprocessor 5, e.g. of the type sold as Part No. ST6210 by SGS-Thomson.

The microprocessor includes an internal read-only control memory, a read/write working memory, and a plurality of input/output terminals of the analog digital type which can be programmed individually to function either as input or output or input/output terminals.

An oscillator 6 supplies a periodic clock signal to the microprocessor 5 at a frequency in the 8 MHz range.

A multiplexer 7 of the analog type with eight inputs picks up a plurality of signals and selectively transfers them, through an output terminal 8, to an input port of the microprocessor 5.

The multiplexer 7 is controlled by an enable output signal from a port 9 of the microprocessor, and by a triad of selection signals received through a triad 10 of microprocessor outputs.

Typically, the signals received by the multiplexer are,

a reference voltage representing a desired temperature of sanitary water (SAN), as generated by a potentiometer 11 which can be set by the user,

a reference voltage representing a desired temperature of heating water (RISC), as generated by a potentiometer 12 which can be set by the user,

a reference voltage representing a maximum power output of the boiler (PMAX), as generated by a potentiometer 13 to be set by specialized personnel upon installation or inspection according to the characteristics of the boiler for which the board is intended,

a reference voltage representing a power output from the boiler under starting conditions (PAVV), as generated by a potentiometer 14 to be set by specialized personnel upon installation or inspection according to the characteristics of the boiler for which the board is intended,

a voltage representing the temperature of sanitary delivery water (TSAN), as measured by a heat-variable resistive probe 15 connected to the voltage supply +5 V through a voltage divider 16, whose intermediate node is connected to an input of the multiplexer 7,

a voltage representing the temperature of the primary water in the boiler (TRISC), as measured by a heat-variable resistive probe 17 connected to the voltage supply +5 V through a voltage divider 18, with an intermediate node connected to an input of the multiplexer 7,

a binary voltage signal indicative of demands for operation of the boiler, as generated by a voltage divider 19 whose intermediate node is connected to ground through a resistor 20 and a series of two switches 21, 22, which are closed by an ambient temperature-measuring thermostat and a system operation programming clock, respectively, and

a voltage signal FLUSSAN indicative of sanitary water delivery which is generated in a manner to be explained.

According to these signals, as selectively received through the multiplexer 7, the microprocessor will perform the appropriate regulating functions by acting on the regulating members shown on the right-hand side of Figure 1.

In particular, it will generate at an output 23 a control signal to operate a fan, where provided, for driving off residues from a preceding combustion.

The output 23 is connected to the input of a circuit 24 functioning to amplify power/voltage and schematically shown as such, which supplies the winding 25 of an electromagnetic relay whose closed contacts power the fan.

In a similar way, the microprocessor 5 controls, through an output and an amplifier 26, an electromagnetic relay 27 which opens a fuel cut-off valve, or powers a flame ignition and monitoring device (where provided) which, in turn, opens the fuel cut-off valve.

The amplifier 26 is supplied the voltage + 20 V through two external protection switches 28, 29, respectively associated with a thermostat for the maximum boiler water temperature and with a sensor sensing the presence of water in the boiler.

Depending on applications, there may be provided additional protections, e.g. for the maximum temperature of the flue gas, to turn off the power supply to the amplifier 26 or directly to the relay 27.

An intervention signal of such protections, to be input to the microprocessor, is obtained through a voltage divider (30), with an intermediate node connected to a microprocessor input.

The fuel flow modulating function is controlled, using a pulse-width modulation (PWM) technique, through a microprocessor output 31 connected to an integrating network (comprising the resistors 32, 33 and capacitor 34) whose output is connected to an input of an amplifier 35 driving the base of a transistor 36 which has its emitter grounded and collector connected to a terminal of a control winding 37 of a modulating valve.

The other terminal of the winding 37 is connected to the voltage + 20 V through the thermostatic protection switch 28.

Although not illustrated, it may be appreciated that the inductive loads, such as 25, 27, 37, are provided with a recirculating diode and possibly a limiting resistor for the demagnetizing current and for limiting/suppressing the self-induced reverse release voltages.

The water circulation function is served by a pump which is controlled through an output 57 of the microprocessor supplying an amplification circuit 58 which energizes the winding 59 of an electromagnetic relay whose closed contacts power the pump.

The switching function for the thermal flow being supplied to the primary/sanitary heat exchanger is controlled by a sanitary flow sensor 38 external of the board, which will close the supply circuit at + 20 V to the winding 39 of a relay controlling a diverting valve, for example.

The presence of a sanitary flow is displayed by a light indicator 40, suitably connected to the winding 39, and is signalled to the microprocessor (through the multiplexer 7) by a signal FLUSSAN generated by a voltage adapter/limiter also connected to the supply circuit to the winding 39 and comprised of a Zener diode 41 and a resistor 42.

Through two outputs 43, 44, the microprocessor drives two light indicators 45, 46, preferably LEDs (light-emitting diodes) with a limiting resistor, respectively indicating activated heating functionality and alarm functionality for detected malfunctions.

The alarm indication may be cut off by means of a reset pushbutton 47 which will break the supply circuit to the indicator 46.

In accordance with the invention, the board 1 is further provided with an interface connector 48, preferably one with three terminals 49, 50, 51, one, 50, of which is connected to an input/output port 52 of the microprocessor via a resistor 53.

The port 52 is conveniently programmed to receive a request communication signal from outside, and to activate, upon request, a protocol of communication to the outside through the connector 48.

By means of this protocol, the microprocessor can receive commands from outside to operate accordingly.

Among the operations requested is also the supply of information to the outside world, e.g. the temperature detected, even over time, of the sanitary or the boiler water, the temperature settings or set points of the sanitary boiler water, the limits set for the maximum power and the starting power, the probe connection states (connected, disconnected, shorted), etc..

It can be seen, in fact, that any disconnection or shorting of the probes such as 15, 17 will be manifested, by virtue of the connections to the multiplexer inputs through the dividers 16, 18, as a voltage falling outside a predetermined range of variability regarded as acceptable.

The microprocessor terminal 52 designed to function as an outside communication interface is conveniently protected from overvoltages and reverse input voltages by the limiter diode pair 54, 55, as suitably connected between the terminal 50 and the voltage + 5 V or ground, respectively.

The terminal 51 is conveniently connected to ground, and the terminal 49 is conveniently connected to the voltage +20 V. In this way, an external unit connected to the connector 48 may be powered from the board 1 with no need for separate voltage sources.

The test device or tester to be employed for any servicing operations may consist, therefore, of a very simple portable unit with no power supply.

This does not rule out the possibility of using a standard apparatus such as a PC, in which case the connection gate 48 may be configured, both electrically and logically, as a standard serial gate, e.g. an RS232.

According to a further aspect of the present invention, the board 1 is also provided with a non-volatile memory 56, preferably of the EEPROM type.

An EEPROM storage which is particularly well suited to an application of this type by virtue of its low cost and its capability to withstand a large number of write cycles (up to 1 million) is the memory sold by SGS-Thomson as Part No. ST92C66.

Connecting this memory to the microprocessor 5 is a matter quite simple: the enable signal output from the multiplexer 7 is also utilized for memory selection (the two components are enabled for opposite signal levels), and the three-wire interface, a microwire type, of the component is connected to three terminals of the microprocessor 5, collectively denoted by the numeral 57, to receive a clock signal CK and information serial bits DI to be written, and to transmit the read information serial bits DO.

Conveniently, the memory 56 is written a plurality of information entries relating to the system operation, as well as a set of necessary parameters for its control and characteristic data of the board, such as Serial and Model numbers, and manufacturing and installation dates.

The advantages to be derived from the use of a communication interface and a non-volatile memory in the inventive board, in terms of production flexibility, inspectability, and ease of maintenance, will be the more apparent from a brief description of trim board manner of operating in the context of a heating system.

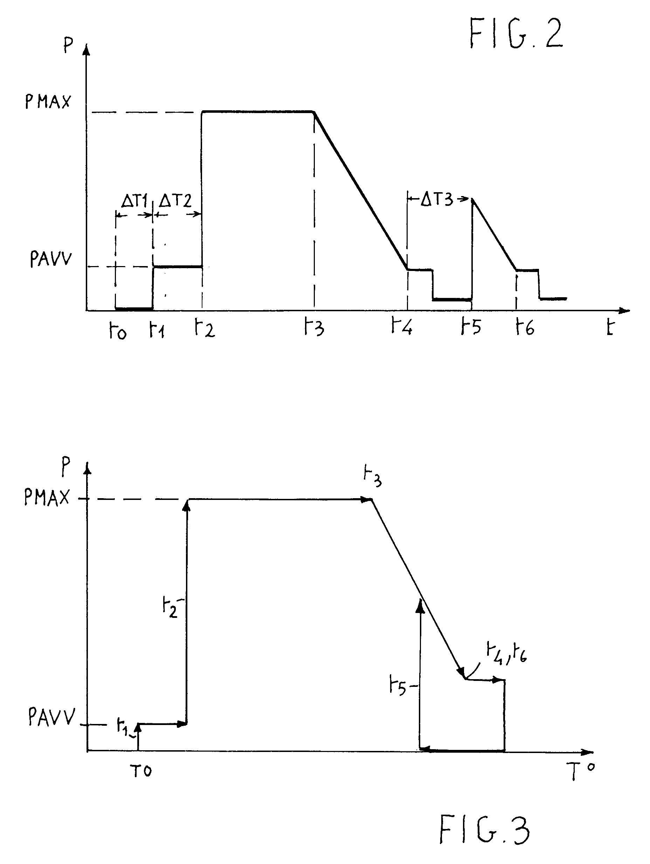

The manner of operating is schematized by the timing diagram of Figure 2 and the regulation diagram of Figure 3.

In Figure 2, it has been assumed that the boiler, initially in an off state, is activated at a time T0.

At time T0, the fan (where provided) is activated to drive off combustion residues.

After a time ΔT1, as determined by the timing output from the microprocessor, the microprocessor will control the ignition operation on (time T1, relay 27).

Once the combustion process is started, the boiler is held in a condition of limited power as determined by the starting power limiting signal PAVV for a time ΔT2.

It can be seen at once that the time intervals ΔT1 and ΔT2 are varying parameters with the type of boiler and installation which are impressed by the internal timing mechanisms of the microprocessor, whereby they are required to match specific requirements, a specialization of the microprocessor at the production stage.

To oercome this, it is desirable to have parametrized and independent adjustments available.

This possibility is afforded by the provision of the non-volatile memory 56, into which the desired values for ΔT1 and ΔT2 may be stored according to the type of the boiler for which the board is intended.

These values are read by the microprocessor, which will act in conformity.

Likewise, the starting power PAVV sought for the boiler type and the system limitations, may be stored into the memory 56, thereby making the provision of the potentiometer 14 and its calibration unnecessary.

At time t2, after the interval ΔT2 has elapsed, the regulating system is activated which is based on a measurement of the temperature (e.g., T1 in Figure 3).

Since the temperature is still largely below the desired (set point) one, the gas modulating valve is opened to a level which corresponds to the maximum admissible power for the boiler (PMAX).

It will be appreciated that the maximum power level is also dependent on the boiler type, and constitutes a variable parameter.

The EEPROM 56 allows this parameter to be stored, thereby making the provision of the regulating potentiometer 13 and its calibration unnecessary.

At a time t3, when the temperature of the boiler water has reached a temperature TM1 close to the regulated temperature TRISC, the microprocessor begins to modulation control the modulating valve.

That is, a condition of proportional regulation to the temperature variation is entered.

This is necessary to avoid that the target temperature may be reached and exceeded on account of the boiler thermal inertia.

Apparently, the difference

$$\Delta T = TRISC - TM1$$

which defines the amplitude of the proportional band, is also a function of the system, as well as of the set point temperature TRISC.

A wide proportional band makes the system slow to respond, a narrow proportional band makes the heating system response prompt but apt to produce temperature surges and, in the extreme, to be unstable.

It is therefore desirable that the proportional band $\Delta T$ can be matched to the boiler characteristics, which is made possible by the optimum value for the proportional band having been stored in the memory 56.

At a time T4, the delivery thermal power is reduced to a minimum, and subsequently to zero upon the temperature reaching the desired temperature.

After a time interval $\Delta T3$ has elapsed, at a time T5 when the water temperature has dropped to a value TM2, the regulating system is again operated to modulation control the modulating valve on the basis of the target temperature TRISC.

The time T5 when this takes place, that is the hysteresis of the regulating system, may be either determined according to the water temperature or the elapsed time since the time T4.

In either cases, it is desirable that the hysteresis be parametrized to suit the system, which is made possible by providing the memory 56.

At a time T6, when the target temperature for the heating water is again attained, the modulating valve is once again closed, and so on.

In a heating system, the ultimate effect sought is one of space heating rather than water heating.

The heating water is but the intermediary through which space heating is accomplished.

It will therefore be appreciated that the operations just described are conditioned by a control signal supplied to the microprocessor 5 from appropriate control devices via the multiplexer 7.

The control devices comprise, as shown in Figure 1, the switch 22 of a programming clock which distributes the heating operations over the day, and contacts 21 of a thermostat responsive to the ambient temperature.

With improved systems, the system operation may obviously be controlled to follow a varying programmable temperature pattern through the day or the week to suit the user's own demands.

In Figure 3, the foregoing considerations are illustrated by a power/temperature regulation diagram.

In the event of a malfunction, e.g. by operation of the thermostatic protection 28 or of the lack-of-water sensor 29, the boiler would be shut down and the alarm light indicator 46 be turned on by the microprocessor.

The same situation would be met on the microprocessor 5 detecting a break or a short of the sensors such as 15, 17.

It is therefore apparent that, while the processor is capable of recognizing the type of the malfunction or failure that has occurred, the user is provided an alarm indication which is encoded on the failure basis.

In the presence of an alarm, the user may try to reactivate the system by operating the restore pushbutton RST 47, which would be allowed were the malfunction is transient in nature.

If the attempt fails, then the user might shut down the system and apply for specialized help.

Thus, it can be appreciated that all the information concerning the failure or malfunction would be lost, so that the specialized intervention is bound to become a particularly troublesome procedure.

By providing the non-volatile memory 56 and the communication gate 48, this problem can be overcome.

Upon the occurrence of a failure or a malfunction, the microprocessor 5 will not only shut down the boiler, but also log the time when the failure occurred and the type of failure detected.

For this purpose, the microprocessor 5 may be equipped, in a known manner, with an internal clock/counter operative to record the system hours of operation and periodically, e.g. every hour, save the contents of the counter into the memory 56.

In this way, even in the event of a mains power outage or of an intentionally cutoff power supply, the information about the hours of operation, failures, and malfunctions, can be saved with the time approximation dictated by the time interval between savings.

Thus, on the occasion of a service or repair intervention, the serviceman can have access, through the communication gate, to useful information to direct him at once to the most recent causes of boiler lock and the most appropriate correction steps.

Also in the case of ordinary maintenance, the possibility to have the system full history and that of its faults (or, where the memory 56 capacity disallows it, of just the latest period) ready at hand is useful to point the overhauling operations to the most appropriate areas.

Thus, the considerations made so far bring out the important advantages afforded by the board forming the subject-matter of the invention, in terms of adaptability at the production/installation stage and of servicing convenience.

However, as previously mentioned, important advantages are also secured in terms of inspectability of the individual board.

In fact, and with no need for probes to detect the signals present at the various points of the board, an inspection methodology can be established on the basis of the detection of such signals, as received by the microprocessor 5, the detection being effected by interrogation of the microprocessor 5 through the communication gate 48.

Likewise, the system and board performances may be simulated and checked by largely substituting corresponding information supplied to the microprocessor 5 through the gate 48 for external components of the board and the signals generated therefrom.

This ensures a drastic reduction in complexity and cost of the inspecting and setting equipment and in the time required to carry out the operations associated therewith.

The foregoing description only covers a preferred embodiment of the invention, given herein by way of example and not of limitation, and it is understood that many changes may be made thereunto.

As an example, the board may be set up for heating systems including a pilot or safety flame, and the checking procedure may provide, once the regulating stage is entered and the set temperature of the water attained, for the fuel control valve to be fully closed, thereby keeping just the pilot flame alive, at each subsequent intervention the modulating valve being then controlled for an appropriate time period by operative linking to the starting power, where necessary.

There may be provided control devices for fluid circulation pumps or combustion air feed/suction pumps, and with liquid fuels, also fuel delivery pumps and possible atomizers.

Thus, the application of the board described is not limited to controlling gas-burning combined boilers.

Likewise, the connection interface with the outside world, which is preferably a serial type for cost reasons, may be replaced with an interface of the parallel type.

Also, the microprocessor, provided with inputs of the analog type and an internal A/D converter, could be a purely digital type with parallel input gates, the A/D conversion function being then performed by external components, where required.

Further, the read/write non-volatile memory may be provided internally of the microprocessor, rather than externally thereof, by employing existing microprocessors with this feature.

## Claims

1. An electronic control board (1) for boilers, comprising:

    a control microprocessor (5);

    means (7,11,12,13,14,16,18,19,20) for inputting signals to said microprocessor representing variable set points to be regulated and protective actions;

    control means (26,27,35,37) connected to outputs of said microprocessor to act on devices for regulating said variables in response to signals from said microprocessor; characterized in that it comprises:

    a communication connector (48) connected to said microprocessor for connecting said microprocessor to microprocessor interrogation and control devices external of the board, whereby electric states of said board, as detected by said microprocessor, can be monitored through said microprocessor (5) and said connector (48) forming a communication port.

2. A control board as in Claim 1, comprising a non-volatile read/write memory (56) connected to said microprocessor (5).

3. A control board as in the preceding claims, wherein said connector forms a serial communication port having power supply terminals (49,51) to external apparatus of said board (1).

4. A control board as in Claim 2, wherein said non-volatile memory is an EEPROM storing variable and control parameters used by said microprocessor.

5. A control board as in Claim 4, wherein said variable and control parameters include a maximum boiler running power.

6. A control board as in Claim 4, wherein said variable and control parameters include a boiler starting power.

7. A control board as in Claim 4, wherein said variable and control parameters include a boiler starting time.

8. A control board as in Claim 4, wherein said microprocessor (5) includes an internal clock, and the timing indication provided by said clock is stored periodically into said non-volatile memory (56).

9. A control board as in Claim 8, wherein said microprocessor (5), on recognizing anomalous boiler events, stores an anomalous event-representing code and a timing indication related to the event into said non volatile memory (56).

FIG. 1

EP 0 636 954 A1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-32 27 292 (MITSUBISHI DENKI K.K.) 26 January 1984 * page 3, line 5 - page 5, line 32; claim 1; figure 2 * | 1 | G05B19/042 |
| Y | | 2,4,8,9 | |
| Y | PATENT ABSTRACTS OF JAPAN vol. 13, no. 141 (P-853) 7 April 1989 & JP-A-63 307 502 (FANUC LTD.) 15 December 1988 * abstract * | 2,4 | |
| A | EP-A-0 351 882 (HIITACHI LTD.) 24 January 1990 * column 4, line 4 - column 4, line 33; figure 1 * | 1,3 | |
| Y | PATENT ABSTRACTS OF JAPAN vol. 15, no. 203 (M-1116) 24 May 1991 & JP-A-03 055 403 (BABCOCK HITACHI K.K.) 11 March 1991 * abstract * | 8,9 | TECHNICAL FIELDS SEARCHED (Int.Cl.6) G05B |

The present search report has been drawn up for all claims

| Place of search | Date of completion of the search | Examiner |
|---|---|---|
| THE HAGUE | 7 November 1994 | Nettesheim, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)